# EUROPEAN PATENT APPLICATION

(11) **EP 4 792 936 A1**
(43) Date of publication of application: **19.08.2026**
(21) Application number: 26154276.5
(22) Date of filing: 27.01.2026
(51) Int. Cl.: B02C 4/32, B02C 4/42, B02C 4/44, B02C 15/00, B02C 23/16, B02C 25/00, B03B 9/04, C04B 5/00, C21B 3/06, C21B 3/08, C22B 7/00, C22B 7/04

(54) **SYSTEM AND METHOD FOR THE CONTINUOUS TREATMENT OF STEEL REFINING RESIDUE, AS WELL AS PLANT FOR THE RECOVERY OF WHITE SLAG POWDER FROM STEEL REFINING RESIDUE WHICH INCLUDES THIS TREATMENT SYSTEM**

(30) Priority: 13.02.2025 IT 202500002712
(71) Applicant: AFV Acciaierie Beltrame S.p.A., 36100 Vicenza (IT)
(72) Inventor: MEDA, Franco, 35010 Gazzo (PD) (IT)
(74) Representative: Autuori & Partners S.R.L.

(57) **Abstract**

A system for the continuous hot treatment of steel refining residue in a steel process comprising a grinding unit (100) acting on the refining residue (R) to reduce it into groud pieces (P) of controlled size and a separating unit (200) acting on the ground pieces (P) to promote the separation of the coarse fraction (C) from the fine one (S). The grinding unit (100) includes at least one plurality of first pairs (110) of grinding rollers **(111, 112)** placed side by side and substantially parallel so as to define a first work plane (n1) adapted to accommodate the refining residue (R), the grinding rollers **(111, 112)** of each of these first pairs (110) being counter-rotating to grind the refining residue (R) and drag it below said first work plane (**π1**).

## Description

### Technical field

The present invention is generally applicable to the technical field of the iron and steel industry, and in particular concerns a system and a method for the continuous treatment of steel refining residue.

The invention also concerns a plant for the recovery of powdered white slag from steel refining residue which includes this treatment system.

### Definitions

In this text, the term "steel refining residue" or derivatives thereof refers to the residue that is formed as a result of the refining treatment of steel in a ladle furnace (LF). It is generally composed of steel dross, white slag, possibly refractory material and impurities.

In this text, the term "steel dross" or derivatives refers to the ferrous part of the steel refining residue.

In this text, the term "white slag" or derivatives refers to the slag composed essentially of the lime necessary for the refining processes, the reaction products of the deoxidation and desulphurization phases of the liquid steel bath and the wear materials of the refractory material of the ladle furnace.

### State of the art

It is known that the production processes of scrap steel products first involve the melting of the latter in an electric arc furnace (EAF) and then the transfer of the molten mass to a ladle furnace (LF) for the refining process, which involves the addition of additives and lime that will form the white slag during treatment.

It is also known that white slag can be valorized, for example by its use in a new steel process or for other uses.

To this end, the white slag must undergo the so-called "white slag" process of withering, i.e. controlled cooling, which can take place in appropriate plants, such as the one described in the international patent application WO2021/198977.

In order to be valorized, the white slag must be as far as possible fed to these plants or in any case used without impurities, and for this reason it must be separated from the other constituents of the refining residue and in particular from the steel dross.

For this purpose, systems are known that essentially consist of a vibrating screen on which the residue is loaded at high temperatures (about 900 °C) in pieces taken from a special pit by means of a wheel loader. Below the vibrating screen there is a hopper that is also vibrating, which is connected to the inlet of the plant by means of a vibrating channel.

An obvious disadvantage of these well-known systems is that they clog very often, since the various portions of refining residue tend to adhere in such a way as to create a barrier to the fall of the white slag.

Furthermore, these plants are greatly inefficient, since the amount of white slag that can be recovered is very low. A good part of the white slag, in fact, remains adhered to the dross, which makes it unusable.

A plant for grinding steel slag is known from patent application CN111747669, whereas a device for recycling plasterboard is known from the European patent application EP2595995.

### Summary of the invention

The purpose of the present invention is to at least partially overcome the drawbacks found above, providing a system and a method for the treatment of steel refining residue of high efficiency and relative economy.

Another purpose of the invention is to provide a system and a method for the treatment of steel refining residue that takes place continuously, without clogging.

A further purpose of the invention is to provide a system and a method for the treatment of steel refining residue that allows the recovery of a high quantity of white slag.

These purposes, as well as others which will appear more clearly below, are achieved by a system and a method for the treatment of steel refining residue in accordance with claims 1 and 13 respectively.

Advantageous embodiments of the invention are defined in accordance with the dependent claims.

### Brief description of the drawings

Further characteristics and advantages of the invention will be more evident in the light of the detailed description of a preferred but not exclusive embodiment of the invention, illustrated by way of non-limiting example with the help of the combined drawing tables in which:

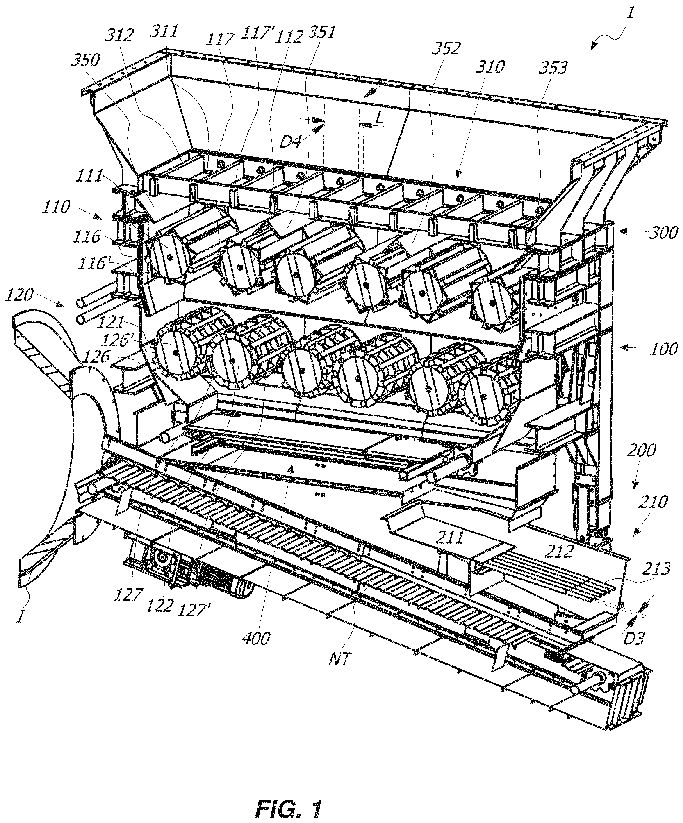

**FIG. 1** is a sectioned axonometric view of an embodiment of a system **1** for the treatment of the refining residue **R** of steel;

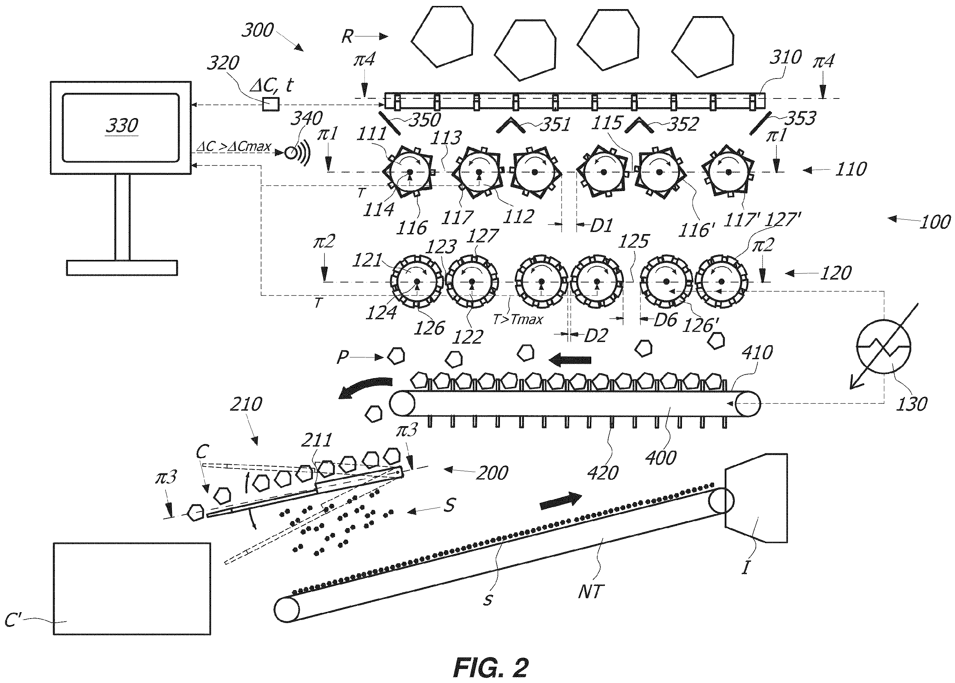

**FIG. 2** is a schematic axonometric view of a system **1** for the treatment of the refining residue **R** of steel;
**FIG. 3** is a front schematic view of the embodiment of a system **1** for the treatment of steel refining residue **R** of FIG. 1 which includes a suction apparatus **500.**

### Detailed description of some preferred embodiments

Referring to the figures cited, a system **1** is described for the continuous treatment of the steel refining residue **R** obtained from a steel process, in particular in the production of steel products from cast steel scrap in an electric arc furnace (EAF).

Essentially, the system **1** is able to treat the refining residue **R** when it is hot, i.e. when it is red in colour, for example with a temperature of about 900 °C and in any case not less than 750 °C. As known, the refining residue **R** can be taken from a special pit and loaded into system **1** by means of one or more wheel loaders.

Once loaded into the system **1,** the refining residue **R** can first be ground to reduce it into pieces **P** of controlled size, which can then be vibrated to separate the coarse fraction **C,** which includes or is essentially made up of steel dross, from the fine fraction **S,** which includes or is essentially made up of powdered white slag.

Eventually, the white slag can be advantageously enhanced and recovered by subjecting it to the whitering process, possibly through an appropriate white slag recovery system, which in a non-limiting example can be carried out according to the teachings of the international patent application WO2021/198977.

For this purpose, the fine fraction **S** leaving the system **1** can fall onto an NT conveyor belt, preferably of the slat type, which can feed a white slag recovery system with an inlet **I.**

On the other hand, the coarse fraction **C** can be collected in a container **C',** and preferably recycled in the process of melting the steel.

To carry out the above process, the system **1** may include an upper grinding unit **100** acting on the refining residue **R** to reduce it in the ground pieces **P** and a lower separating unit **200** acting on the ground pieces **P** to promote the separation of the coarse fraction **C** from the fine fraction **S.**

Appropriately, the separating unit **200** may include a vibrating screen **210** which includes a frame **212** with a collection surface **213** of the ground pieces **P** and a plurality of rigid rods **211** placed side by side and at a predetermined distance **D3,** which may for example be 60 - 70 mm.

Appropriately, the rigid members **211** can be substantially parallel and can be adjacent to the accumulation surface **213,** so as to define a work plane **π3**.

The vibrating screen **210** can be vibrated by appropriate motor means, not illustrated because they are known *per se,* in order to promote the separation by gravity of the fine fraction **S** from the coarse fraction **C.**

Advantageously, a conveyor belt **400** can be provided, preferably of the Redler type, including an advance plane **410** placed below the grinding unit **100** to accommodate the ground pieces **P** of the refining residue **R** and a plurality of pushing elements **420** operationally connected with the advance plane **410** to promote the transport of the ground pieces **P** along the latter.

Preferably, the advance plane **410** can be substantially horizontal and can be placed above the vibrating screen **210,** so that the ground pieces **P** of the refining residue **R** at the outlet of the feed plane **410** fall on the storage surface **213** of the vibrating screen **210.**

On the other hand, the latter can be placed above the conveyor belt **NT** in order to feed it directly with the fine fraction **S** that falls through the rigid rods **211,** and can be tilted towards the container **C'** for the collection of the coarse fraction **C.**

Appropriately, the system **1** may also include a first selection unit **300** placed above the grinding unit **100** suitable for separating the dross and in general the coarser parts, which could damage the operation of the underlying units, from the refining residue **R.**

For this purpose, the first selection unit **300** may include a grid **310** defining a work surface **π4** adapted to accommodate the refining residue **R.**

Appropriately, the grid **310** may have openings **311** through which the refining residue **R** can pass. For example, in a preferred but not exclusive embodiment, the openings **311** can have a width **L** of 300 - 400 mm and a length **D4,** which represent the maximum passage size for the portions of refining residue **R,** of 800 - 900 mm.

The grid **310** can be fixed, and the refining residue **R** can pass through the openings **311** simply by gravity.

The coarse parts that remain above the grid **310** could clog it, which would block the operation of the system **1.**

To avoid this, the first selection unit **300** may include weighing equipment, such as a load cell **320,** operationally connected with the grid **310** and control equipment, such as a PLC **330,** operationally connected with the weighing equipment and programmed to periodically monitor the decrease in load **ΔC** on the grid **310** in a predetermined time interval **t** and to selectively activate alarm means **340** if this decrease in load **ΔC** is above a predetermined threshold value **ΔCmax,** which means that the grid **310** is becoming clogged.

Following the activation of the alarm means **340,** an operator can intervene with an excavator, known *per se,* who can remove the coarser parts or move them on the grid **310** to promote their passage through the openings **311** thereof.

To prevent the operator from damaging the grid **310** with the excavator during this phase, the grid **310** can have the upper surface completely flat, so as not to have any holding point. For this purpose, the grid **310** can be made with plates **312** all having the same width, welded together.

The grinding unit **100** may include a plurality of pairs **110** of upper grinding rollers **111, 112** and a plurality of pairs **120** of grinding lower rollers **121, 122,** which may be placed side by side and substantially parallel in order to define an upper work plane **π1** and a lower work plane **π2.**

Even if this embodiment with two rows of grinding rollers will be referred to below, it is understood that the grinding unit **100** may include any number of rows of rollers, provided that there is at least one, without exceeding the scope of the attached claims.

The upper grinding rollers **111, 112** and the lower rollers **121, 122** can be counter-rotating to grind the portions of refining residue **R** that falls from the grid **310** and drag it below the work planes **π1** and **π2** respectively, thus grinding it and sectioning it into pieces **P** of controlled size.

In order to correctly guide the portions of refining residue **R** that fall from the grid **310** towards the interspace **113** between the upper grinding rollers **111, 112** avoiding that they get wedged in the interspace **115** between the pairs of the same grinding rollers **111, 112** thus stopping the process, guide means **350, 351, 352, 353** can be provided, for example suitably shaped metal profiles.

To grind the portions of refining residue **R** that falls from the grid **310,** the upper grinding rollers **111, 112** and the lower rollers **121, 122** may include a plurality of respective radial appendages **116, 117** and **126, 127** to intercept and grind the refining residue **R.**

Preferably, the radial appendages **116, 117** and **126, 127** can extend longitudinally along the entire length of the relative grinding roller **111, 112** and **121, 122.**

The upper grinding rollers **111, 112** may also have cuspidal members **116', 117'** interposed between the radial appendages **116, 117,** whereas the lower grinding rollers **121, 122** may have connecting walls **126', 127'** connecting the adjacent radial appendages **126, 127.** The connecting walls **126', 127'** of two grinding rollers of the same pair can be staggered.

Furthermore, the upper grinding rollers **111, 112** can be placed at a predetermined distance **D1,** for example 150 - 200 mm, whereas the lower ones **121, 122** can be placed at a distance **D2** lower than **D1** of the upper rollers, for example 40 - 50 mm.

Thanks to the above features, the upper grinding rollers **111, 112** and lower rollers **121, 122** are able to perform different functions.

In fact, the upper ones **111, 112,** which are equipped with the cuspidal members **116', 117'** and are more spaced apart to each other, are able to crush the portions of refining residue **R** that pass through the openings **311** of the grid **310** to reduce them to portions of smaller size.

On the other hand, the lower ones **121, 122,** which are equipped with the staggered connecting walls **126', 127'** and are closer to each other, will be able to grind the portions of refining residue **R** already previously crushed, reducing them to the appropriate size.

The size of the refining residue **R** which passes through the openings **311** of the grid **310** could be such that some portion of the refining residue cannot pass through one of the passage ports **113** or **123** of width **D1, D2** between the rollers **111, 112** or **121, 122,** which would block or otherwise slow down the process.

To avoid this, the grinding unit **100** can provide for a check on the torque **T** of rollers **111, 112** and **121, 122,** reversing the direction of rotation if this torque exceeds a maximum stress threshold **Tmax,** which means the rollers are unable to grind the portion of refining residue **R.**

To this end, a plurality of torque **T** detecting means may be provided, for example torque sensors **114, 124,** each operationally connected with a respective pair of grinding rollers **111, 112** and **121, 122,** and control means, for example the PLC **330** itself or another dedicated PLC, operationally connected with these means of detection **114, 124.**

The control means **330** can be programmed to selectively reverse the motion of the rollers if one of the torque sensors of the detection means **114, 124** detects on one of the pairs of grinding rollers **111, 112** or **121, 122** a torque **T** greater than a predetermined threshold value **Tmax.**

Since the grinding rollers **111, 112** or **121, 122** normally have a direction of rotation that tends to convey the portion of refining residue **R** towards the passage gap **113, 123,** the reversal of the direction of rotation will lead the portion of refining residue **R** clogged to unclog.

In the case of the upper grinding rollers **111, 112,** this rotation in the opposite direction leads the portion of refining residue **R** to impact against the guiding means **350, 351, 352, 353,** which in this case act as abutment elements, so that the portion of refining residue **R** takes a new position and can then be crushed by said upper grinding rollers **111, 112** when they resume their normal direction of rotation.

On the other hand, in the case of the lower grinding rollers **121, 122,** this rotation in the opposite direction promotes the passage of the portion of the refining residue **R** through the passage gap **125** between the pairs **120** of said lower rollers **121, 122,** so that it passes below the plane **π2**.

For this purpose, the passage width **125** may have a width **D6** greater than the one **D2** of the passage width **123** between the two lower grinding rollers **121, 122.**

Advantageously, rollers **121, 122** of the lower pairs **120** can be faced with rollers **111, 112** of the upper pairs **110.** In this way, the portion of the refining residue **R** that passes through the passage gap **113** between the pairs **110** of the upper rollers **111, 112** and falls below the work surface **π1** can be easily ground by the lower rollers **121, 122.**

Advantageously, the grinding unit **100** may include cooling media **130** acting on the grinding rollers **111, 112** and **121, 122** of the pairs **110, 120** to cool the external contact surface.

For this purpose, the cooling media **130** may cool the grinding rollers **111, 112** and **121, 122** at the inner side, so that the relative external contact surface cools by conduction through the peripheral wall thereof. Indicatively, the refrigerant fluid can be water at 10 - 30 °C.

Furthermore, the same cooling media **130** or other dedicated cooling media can be operationally connected with the advance plane **410** of the conveyor belt **400** to cool the external surface.

This allows the refining residue **R** to be cooled while it is being processed, which facilitates the subsequent separation step using the refining **unit 200.**

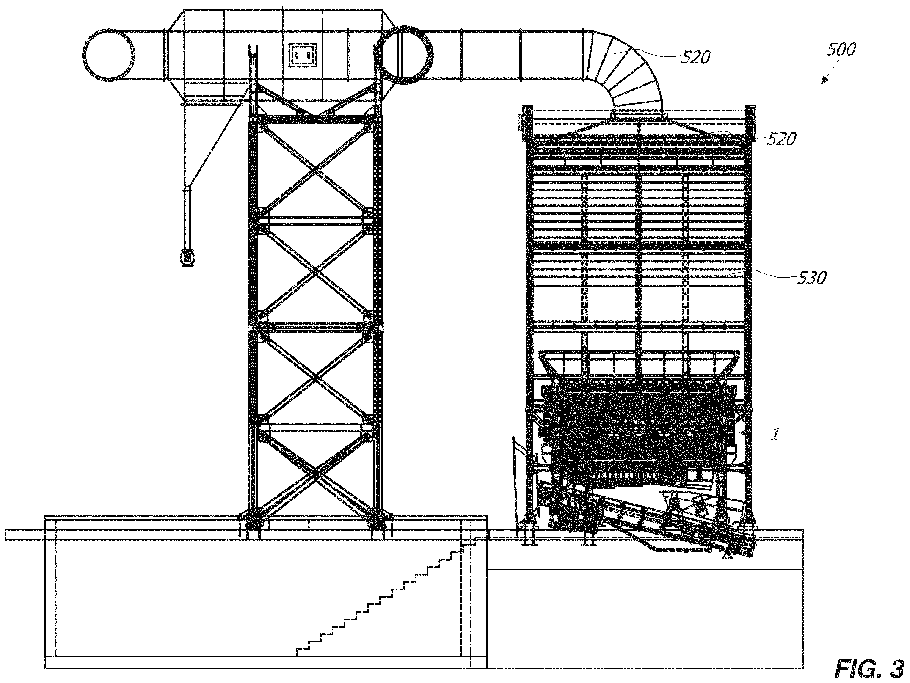

Advantageously, as shown in FIG. 3, the system **1** may include a suction apparatus **500,** with a hood **510** surrounding the grid **310** and the related suction pipe **520.** A shutter **530** that can be opened when loading the refining residue **R** onto the grid **310** may further be provided.

From what has been described above, it is clear that the invention achieves the intended purposes.

The invention is susceptible to numerous modifications and variations, all of which fall under the attached claims. All the parts can be replaced by other technically equivalent elements, and the materials can be different according to the needs, without leaving the scope of protection of the invention defined by the attached claims.

## Claims

1. A system for the continuous hot treatment of steel refining residue in a steelmaking process, the steel refining residue **(R)** being composed of a coarse fraction **(C)** which includes or essentially consists of steel sludge and a fine fraction **(S)** which includes or essentially consists of powdered white slag, the system comprising:
- a grinding unit **(100)** acting on the refining residue **(R)** to reduce it into ground pieces **(P)** of controlled size;
- a separating unit **(200)** acting on the ground pieces **(P)** to promote the separation of the coarse fraction **(C)** from the fine fraction **(S);**
wherein said grinding unit **(100)** comprises at least one plurality of first pairs **(110)** of grinding rollers **(111, 112)** placed side by side and substantially parallel to each other so as to define a first work plane (**π1)** adapted to house the refining residue **(R),** the grinding rollers **(111, 112)** of each of said first pairs **(110)** being counter-rotating to grind the refining residue **(R)** and drag it below said first work plane **(π1)**.

2. System according to claim 1, wherein the grinding rollers **(111, 112)** of said first pairs **(110)** have a first interspace **(113)** having a first predetermined width **(D1),** a second interspace **(115)** being defined between said first pairs **(110)** of grinding rollers **(111, 112),** in correspondence with each of the latter abutment elements **(350, 351, 352, 353)** being provided, said grinding unit **(100)** further comprising a plurality of first torque sensing means **(114)** each operatively connected to a respective first pair **(110)** of grinding rollers **(111, 112)** and first control means **(330)** operatively connected to said first torque sensing means **(114)** and to said first pairs **(110)** of grinding rollers **(111, 112),** said first control means **(330)** being programmed to selectively reverse the rotation of the grinding rollers **(111, 112)** of one of said first pairs **(110)** in the event of detection by said first torque detection means **(114)** of a torque value **(T)** greater than a predetermined threshold torque value **(Tmax),** so as to promote the impact of the refining residue **(R)** against the respective abutment element **(350, 351, 352, 353).**

3. System according to claim 1 or 2, wherein said grinding unit **(100)** further comprises at least one plurality of second pairs **(120)** of grinding rollers **(121, 122)** positioned side by side and substantially parallel to each other so as to define a second work plane (**π2**) substantially parallel to said first work plane (**π1**) adapted to receive the refining residue **(R)** which passes beneath the latter, the grinding rollers **(121, 122)** of each of said second pairs **(120)** being counter-rotating to grind the refining residue **(R)** and drag it beneath said second work plane (**π2**).

4. System according to claims 1, 2 and 3, wherein the grinding rollers **(121, 122)** of said second pairs **(120)** have a third interspace **(123)** having a second predetermined width **(D2)** smaller than said first predetermined width **(D1),** a fourth interspace **(125)** between the grinding rollers **(121, 122)** of said second pairs **(120)** being defined having a third width **(D6)** larger than said second predetermined width **(D2),** said grinding unit **(100)** further comprising a plurality of second torque sensing means **(124)** each operatively connected to a respective second pair **(120)** of grinding rollers **(121, 122)** and second control means **(330)** operatively connected to said second torque sensing means **(124)** and to said second pairs **(120)** of grinding rollers **(121, 122),** said second control means **(330)** being programmed to selectively reverse the motion of the grinding rollers **(121, 122)** of one of said second pairs **(120)** in the event of detection by the relevant second torque detection means **(124)** of a torque value **(T)** greater than a predetermined threshold value **(Tmax),** so as to promote the passage of the refining residue **(R)** through said fourth interspace **(125)** while avoiding clogging said third interspace **(123).**

5. System according to one or more of the preceding claims, wherein the grinding rollers **(111, 112)** of said first pairs **(110),** respectively the grinding rollers **(111, 112; 121, 122)** of said first and second pairs **(110; 120),** comprise a plurality of radial appendages **(116, 117; 126, 127)** to intercept and grind the melt residue **(R),** said radial appendages **(116, 117; 126, 127)** preferably extending for the entire length of the relative grinding roller.

6. System according to the preceding claim, wherein the grinding rollers **(111, 112; 121, 122)** of said first and second pairs **(110; 120),** comprise a plurality of radial appendages **(116, 117; 126, 127)** to intercept and grind the refining residue **(R),** the grinding rollers **(111, 112)** of said first pairs **(110)** further comprising cuspidal members **(116', 117')** interposed between the respective radial appendages **(116, 117),** said grinding rollers **(121, 122)** of said second pairs **(120)** further including connecting walls **(126', 127')** which connect adjacent radial appendages **(126, 127),** the connecting walls **(126', 127')** of each of the grinding rollers **(121, 122)** of said second pairs **(120)** being mutually staggered.

7. System according to one or more of the preceding claims, wherein said grinding unit **(100)** comprises first cooling means **(130)** acting on the grinding rollers **(111, 112)** of said first pairs **(110),** respectively on the grinding rollers **(111, 112; 121, 122)** of said first and second pairs **(110; 120)** to cool them.

8. System according to one or more of the preceding claims, further comprising a first conveyor belt **(400)** comprising:
- an advance plane **(410)** positioned below said grinding unit **(100)** to receive the melt residue **(R)** which falls beneath said first working plane (**π1**) or said second working plane (**π2**), said advance plane **(410)** being operatively connected to said separating unit **(200);**
- a plurality of pushing elements **(420)** operatively connected to said advance plane **(410)** to promote the transport of the ground pieces **(P)** along the latter **(410);**
- second cooling means **(130)** operatively connected to said advance plane **(410)** to cool it.

9. System according to one or more of the preceding claims, wherein said separating unit **(200)** comprises or consists of a vibrating screen **(210)** which includes a collection surface **(213)** of said grind pieces **(P)** and a plurality of rigid rods **(211)** placed side by side to define a third work plane (**π3**), said screen **(211)** being vibrating so as to promote the separation by gravity of the fine fraction **(S)** from the coarse fraction **(C).**

10. System according to one or more of the preceding claims, further comprising a first selection unit **(300)** comprising at least one grid **(310)** defining a fourth work plane (**π4**) adapted to accommodate the refining residue **(R).**

11. System according to the preceding claim, wherein said first selection unit **(300)** further comprises:
- weighing means **(320)** operatively connected with said grid **(310);**
- third control means **(330)** operatively connected with said weighing means **(320);**
- alarm means **(340)** operatively connected with said third control means **(330);**
wherein said third control means **(330)** are programmed to periodically monitor the load decrease (**ΔC**) on said grid **(310)** over a predetermined time interval **(t)** as measured by said weighing means **(320)** and to selectively activate said alarm means **(340)** if said load decrease (**ΔC**) is above a predetermined threshold value **(ΔCmax).**

12. System according to one or more of the preceding claims, further comprising a suction apparatus **(500)** which includes a hood **(510)** with a movable shutter **(530)** which can be opened upon loading the refining residue **(R).**

13. A method for the continuous hot treatment of the steel refining residue **(R)** in a steelmaking process, the refining residue **(R)** being composed of a coarse fraction **(C)** which includes or essentially consists of steel sludge and by a fine fraction **(S)** which includes or essentially consists of powdered white slag, the method comprising in sequence the steps of:
- providing the treatment system **(1)** in accordance with one or more of the preceding claims;
- hot loading the refining residue **(R)** into said treatment system **(1),** the refining residue having a surface temperature of not less than 750 °C;
- grinding the refining residue **(R)** to reduce it to ground pieces **(P)** of controlled size;
- vibrating sieving of the ground pieces **(P)** to promote the separation of the coarse fraction **(C)** from the fine fraction **(S).**

14. A plant for recovering powdered white slag from the steel refining residue **(R)** in a steelmaking process, the steel refining residue **(R)** being composed of a coarse fraction **(C)** which includes or essentially consists of steel sludge and a fine fraction **(S)** which includes or essentially consists of powdered white slag, the plant comprising:
- a system **(1)** for continuously treating the refining residue **(R)** to separate the fine fraction **(S)** thereof from the coarse fraction **(C);**
- a system for recovering powdered white slag from said fine fraction **(S)** having an inlet (**I**);
wherein said continuous treatment system **(1)** of the refining residue **(R)** is operatively connected to the inlet (**I**) of said system for recovering powdered white slag, said continuous treatment system **(1)** of the refining residue **(R)** being the system in accordance with one or more of claims 1 to 12.
